# EUROPÄISCHE PATENTSCHRIFT

(11) **EP 2 152 550 B1**
(45) Veröffentlichungstag und Bekanntmachung des Hinweises auf die Patenterteilung: **19.06.2013**
(21) Anmeldenummer: 08735812.3
(22) Anmeldetag: 04.04.2008
(51) Int. Cl.: B60S 1/38

(54) **WISCHLEISTE UND VERFAHREN ZU IHRER HERSTELLUNG**
WIPER BLADE AND METHOD FOR THE PRODUCTION THEREOF
LAME D'ESSUIE-GLACE ET SON PROCÉDÉ DE FABRICATION

(30) Priorität: 29.05.2007 DE 102007024872
(43) Veröffentlichungstag der Anmeldung: 17.02.2010
(73) Patentinhaber: Robert Bosch GmbH, 70442 Stuttgart (DE)
(72) Erfinder: WYNEN, Paul, B-3910 Neerpelt (BE); BRAUN, Hans, B-3300B Tienen (BE); VAN HOYE, Jan, B-3980 Tessenderlo (BE); BUSEYNE, Wim, B-3500 Hasselt (BE); WOLZ, Udo, 71111 Waldenbuch (DE)
(86) Internationale Anmeldenummer: PCT/EP2008/054071
(87) Internationale Veröffentlichungsnummer: WO 2008/145442

(56) Entgegenhaltungen:
- EP-A- 0 744 326
- WO-A-2006/040259
- DE-A1-102005 009 205

## Beschreibung

### Stand der Technik

Die Erfindung geht von einer Wischleiste nach dem Oberbegriff des Anspruchs 1 und einem Verfahren zu ihrer Herstellung aus.

Aus der DE 10 2004 050 163 A1 ist ein Wischblatt in Flachbalkenbauweise bekannt, das eine Wischleiste mit einer Wischlippe aufweist. Die Wischlippe hat einen keilförmigen Querschnitt, wobei das schmale Ende als Wischkante ausgebildet ist und im Betrieb an einer Fahrzeugscheibe anliegt. Das breitere Ende besitzt Anlageschultern, die über einen Kippsteg mit einer Kopfleiste verbunden sind. Zwischen dem Kippsteg, den Anlageschultern und der Kopfleiste werden zu beiden Seiten des Kippstegs Längsnuten gebildet. In diesen sind Dämpfungsstege vorgesehen, die quer zu den Längsnuten verlaufen und mit mindestens einer der angrenzenden Flanken der Längsnuten stoffschlüssig verbunden sind. Die freien Stirnseiten der Dämpfungsstege können unterschiedliche Konturen aufweisen. Sie können z.B. gegenüber den Anlageschultern schräg verlaufen, eine konvexe Kontur besitzen oder die Kopfleiste und die Anlageschultern senkrecht miteinander verbinden. Durch die Gestaltung der freien Stirnseiten soll die Federkennlinie der Dämpfungsstege modifiziert werden. Schließlich ist eine Ausführung bekannt, bei der die Dämpfungsstege jeweils nur an einer Seite, z.B. an der Kopfleiste oder an den Anlageschultern angeformt sind, an der gegenüberliegenden Seite jedoch nur anliegen oder gar einen kleinen Abstand aufweisen. Die Ausbildung kann auch so getroffen sein, dass aufeinander folgende Stege alternierend an ihrer oberen Seite und an ihrer unteren Seite angeformt und an der gegenüberliegenden Seite jeweils frei sind. Auf diese Weise ist es möglich, dass nur die Dämpfungsstege ausgehend von der Kopfleiste eine Druckkraft auf die Wischlippe ausüben, eine Zugkraft aber unterbleibt. Ferner können die Dämpfungsstege der einen Längsnut zu den Dämpfungsstegen der anderen Längsnut in Längsrichtung versetzt angeordnet sein.

Aus der DE 10 2005 009 205 A1 ist eine ähnliche Wischleiste für ein Wischblatt in Flachbalkenbauweise bekannt. Dabei sind die Dämpfungsstege entweder mit der Kopfleiste und der Anlageschulter sowie dem Kippsteg stoffschlüssig verbunden oder nur mit einem Teil, nämlich der Kopfleiste oder den Anlageschultern, während die gegenüberliegende Seite mit Abstand zu dem jeweils anderen Teil angeordnet ist. Gemäß einer Ausgestaltung sind die Dämpfungsstege aus einem anderen Material als die übrige Wischleiste anextrudiert, wobei das Material eine im Wesentlichen um die Hälfte reduzierte Shorehärte von etwa 30 Shore A gegenüber dem übrigen Material der Wischleiste von etwa 60 Shore A aufweist.

### Offenbarung der Erfindung

Nach der Erfindung sind die Dämpfungsstege in ihrer Längsrichtung trennbar, z.B. indem sie zumindest eine trennbare Sollbruchstelle aufweisen, d.h. die Dämpfungsstege sind zunächst stoffschlüssig sowohl mit den Anlageschultern als auch mit Teilen der Kopfleiste verbunden und werden dann durch geeignete Verfahren getrennt, wobei die Trennlinie an der Trennstelle in Längsrichtung der Dämpfungsstege verläuft. Vorteilhaft ist es dabei, wenn die Dämpfungsstege an der Trennstelle eingerissen und etwa bis zum Kippsteg getrennt werden. Hierzu ist es vorteilhaft, dass die Dämpfungsstege aus einem anderen Werkstoff als die übrige Wischleiste bestehen, und zwar aus einem Werkstoff, der das Weiterreißen des Anrisses unterstützt. Ein solcher Werkstoff ist z.B. ein synthetischer Kautschuk oder ein Blend.

Je nach Anwendungsfall kann es zweckmäßig sein, die Trennstelle in verschiedenen Abständen von der Anlageschulter bzw. den angrenzenden Teilen der Kopfleiste vorzusehen. Damit der Anriss und das Weiterreißen an eben dieser Stelle erfolgen, erhält die freie Stirnseite eine auf die Lage der Trennstelle abgestimmte Gestalt, z.B. weist die freie Stirnseite der Dämpfungsstege an den vorgesehenen Trennstellen Kerben auf, die z.B. durch eine konkave Kontur der Stirnseite gebildet sein können. Ferner kann die freie Stirnseite mit einer angrenzenden Wand der Längsnut eine scharfe Hohlkehle bilden, sodass sich der Anriss von der Hohlkehle nahe dem angrenzenden Teil, z.B. der Anlageschulter oder der Kopfleiste zum Kippsteg hin weiterverläuft. Ist es bezweckt, dass sie Trennlinie etwa mittig zwischen der Anlageschulter und der Kopfleiste verläuft, erhält die Stirnseite die Form einer geschweiften Klammer, deren Spitze in dem gewünschten Abstand zwischen der Anlageschulter und der Kopfleiste nach innen weist.

Neben dem Reißen eignet sich auch das Schneiden als geeignetes Trennverfahren. Hierbei ist es vorteilhaft, dass die Dämpfungsstege entsprechend den gewünschten Trennstellen geschnitten werden, während die Wischleiste in der Montagelinie auf einen Warenträger aufgezogen wird. Durch den Warenträger erhält die Wischleiste eine gute Führung, sodass der Schneidvorgang exakt durchgeführt werden kann, selbst wenn die Dämpfungsstege in den beiden Längsnuten versetzt zueinander angeordnet sind. Ferner kann es günstig sein, die Dämpfungsstege gleichzeitig einzuschneiden, wenn die Wischkante der Wischlippe geschnitten wird oder dann, nachdem die Wischleiste vollständig mit einem Wischblatt montiert ist. Das zum Schneiden der Dämpfungsstege verwendete Messer sollte eine Dicke kleiner 0,5 mm und eine freie Länge von ungefähr 40 mm aufweisen. Besonders eignen sich wegen ihrer Stabilität auch Rollenmesser, die während des Schneidvorgangs am Drehen gehindert sind und zum Nachschärfen um einen gewissen Sektor weitergedreht werden. Schließlich können die Dämpfungsstege an der gewünschten Trennstelle nur etwas angeschnitten werden und dann bis zum Ende gerissen werden. Die erfindungsgemäßen Wischleisten können unter Einhaltung kleiner Fertigungstoleranzen kostengünstig hergestellt werden, da die Trennverfahren ohne großen Aufwand in die Fertigungs- und Montagelinien eingegliedert werden können.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Wischblatt mit einer erfindungsgemäßen Wischleiste,
- Fig. 2: einen Querschnitt entsprechend der Linie II-II in Fig. 1,
- Fig. 3: einen vergrößerten Querschnitt durch eine Wischlippe entsprechend der Darstellung in Fig. 2,
- Fig. 4: eine Variante zu Fig. 3,
- Fig. 5 bis 7: Varianten zur Wischleiste nach Fig. 2,
- Fig. 8: eine perspektivische Darstellung einer Wischleiste entsprechend der Fig. 7,
- Fig. 9: einen Schnitt entsprechend der Linie IX-IX in Fig. 8 und
- Fig. 10: eine Variante zu Fig. 9.

### Ausführungsformen der Erfindung

Ein Wischblatt ist 12 über ein Anschlusselement 14 und einen Gelenkbolzen 16 mit einem Wischarm 10 gelenkig verbunden. Es 12 besitzt eine Wischleiste 20, einen Spoiler 18 und ein Tragelement 48 in Form zweier Federschienen, auf denen der Spoiler 18 zu beiden Seiten des Anschlusselements 14 sitzt. An den Enden des Spoilers 18 sind Endkappen 22 vorgesehen.

Die Wischleiste 20 besitzt eine Wischlippe 24, die im Wesentlichen im Querschnitt keilförmig ist, wobei das schmale Ende eine Wischkante 26 aufweist, die in der Regel geschnitten wird und im Betrieb an einer Fahrzeugscheibe 50 anliegt. An der breiten Seite ist die Wischlippe 24 über einen Kippsteg 32 mit einer Kopfleiste 44 formschlüssig verbunden. Die seitlich über den Kippsteg 32 vorstehenden Teile der Wischlippe 24 bilden Anlageschultern 28, die in gekippter Stellung der Wischlippe 24 an seitlichen Stützleisten 30 der Kopfleiste 44 anliegen. Die Kopfleiste 44 besitzt ferner seitliche Längsnuten 46 zur Aufnahme der Tragelemente 48.

Zwischen den Anlageschultern 28 und den Stützleisten 30 werden zu beiden Seiten des Kippstegs 32 Längsnuten 34 und 36 gebildet, in denen Dämpfungsstege 38, 40 vorgesehen sind, die formschlüssig mit den Stützleisten 30 und den Anlageschultern 28 verbunden sind. Die Dämpfungsstege, 38, 40, die quer zu den Längsnuten 34, 36 verlaufen, weisen in ihrer Längsrichtung Trennstellen 42 oder zumindest Sollbruchstellen entlang von Trennlinien 42 auf. Die Trennstellen werden durch Reißen oder Schneiden erzeugt. Um das Reißen an einer vorbestimmten Stelle zu erleichtern, besitzen die freien Stirnseiten 52, 54, 56 entsprechende Konturen. So ist die Stirnseite 52 konkav geformt, während die Stirnseite 54 eine s-förmige, eine zur s-Form spiegelbildliche Gestalt oder die Stirnseite 56 eine klammerförmige Kontur besitzt. Die besondere Gestalt der Stirnseiten 52, 54, 56 bilden Kerben, durch die die Anrissstelle der Dämpfungsstege 38, 40 und der Verlauf der Trennlinien 42 bestimmt werden.

Anstelle der besonderen Gestaltung der Stirnseiten 52, 54, 56 können die Dämpfungsstege 38, 40 kleine Einschnitte erhalten, die als Kerben wirken, und von denen die Trennstelle 42 durch Reißen fortgesetzt wird. Die Stirnseiten 52, 54, 56 können in den Längsnuten 34, 36 zu beiden Seiten des Kippstegs 32 gleich ausgebildet sein, sie können sich aber auch je nach Anwendungsfall im Bedarfsfall sowohl nach Längsnuten 34 bzw. 36 als auch innerhalb einer Längsnut 34 oder 36 unterscheiden.

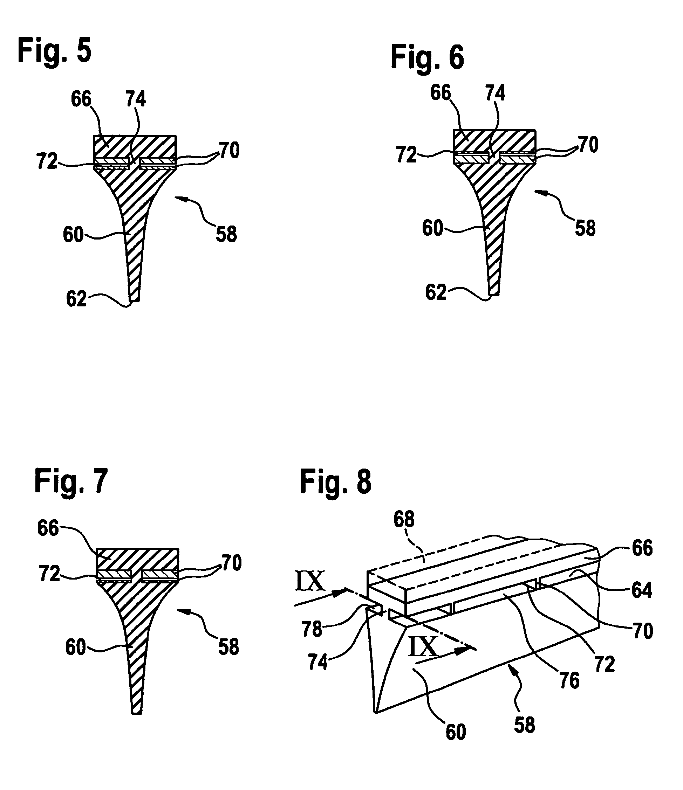

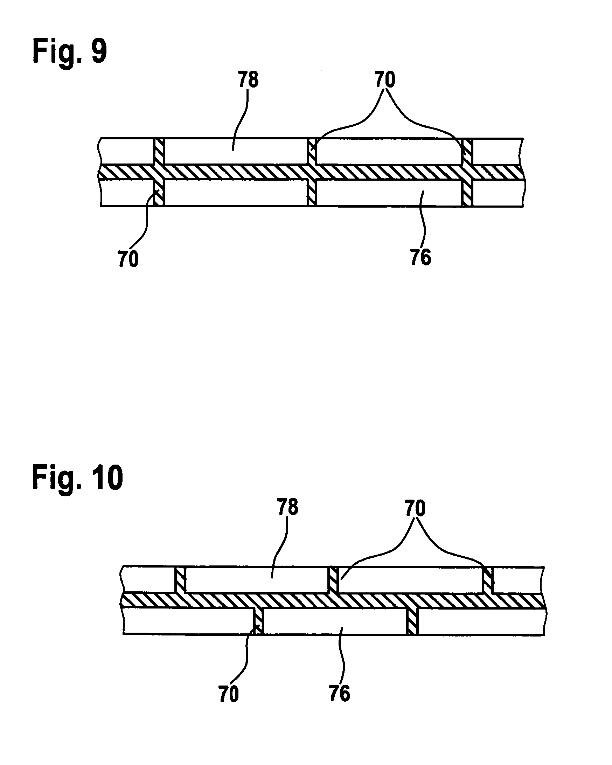

Die Ausführung der Wischleiste 58 nach den Fig. 5 bis 10 unterscheidet sich im Wesentlichen dadurch, dass die Kopfleiste 66 mit einem Tragelement 68 in Form einer Federschiene verbunden ist, und die in Längsnuten 76, 78 vorgesehenen Dämpfungsstege 70 durch Schneiden getrennt sind. Der Schnitt ergibt einen Trennspalt 72, dessen Größe von der Dimensionierung des Schneidwerkzeugs bestimmt wird. Das zum Schneiden der Dämpfungsstege 38, 40, 70 verwendete Messer sollte eine Dicke kleiner 0,5 mm aufweisen. Die Trennstelle 72 kann je nach Bedarf mittig zwischen der Anlageschulter 64 einer Wischlippe 60 und der Kopfleiste 66 liegen. Allerdings kann der Trennspalt 72 auch näher zur Kopfleiste 66 (Fig. 6) oder näher zur Anlageschulter 64 der Wischlippe (Fig. 7) liegen. Fig. 9 zeigt, dass die Dämpfungsstege 70 der Längsnuten 76 und 78, die durch den Kippsteg 74 voneinander getrennt sind, einander gegenüberliegen, während Fig. 10 eine Ausführung zeigt, bei der die Dämpfungsstege 70 in den Längsnuten 76 bzw. 78 versetzt zueinander angeordnet sind.

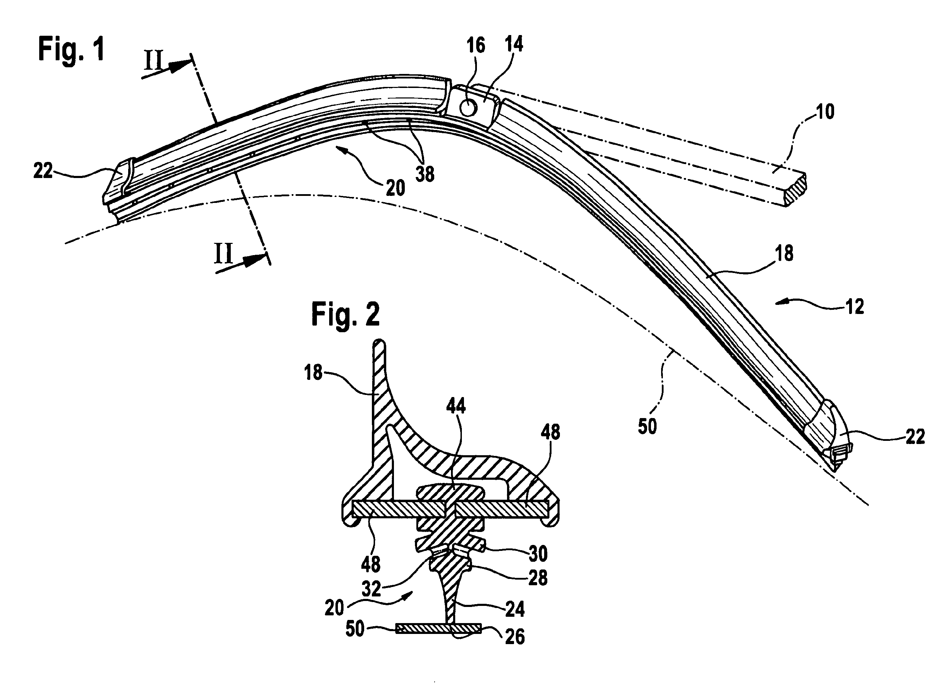

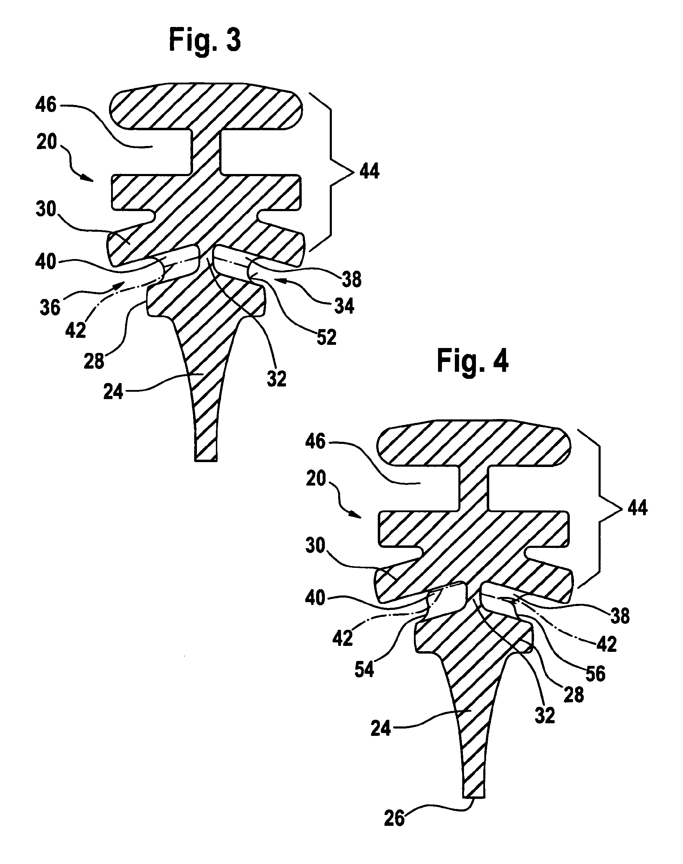

Obwohl die Fig. 1 bis 4 Ausführungen zeigen, bei denen die Dämpfungsstege 38, 40 durch Reißen getrennt werden, und die Fig. 5 bis 10 Ausführungen zeigen, bei denen zur Trennung der Dämpfungsstege 70 ein Schneidverfahren angewendet wird, können grundsätzlich für alle gezeigten Wischleisten 20, 58 beide Verfahren alternativ oder kumulativ verwendet werden.

Da zum Reißen der Dämpfungsstege 38, 40, 70 keine besondere Führung der Wischleiste 20, 58 erforderlich ist, ist es zum Schneiden der Dämpfungsstege 38, 40, 70 vorteilhaft, wenn die Wischleiste 20, 58 beim Schneiden eine gewisse Führung besitzt. Es ist daher vorteilhaft, die Dämpfungsstege 38, 40, 70 an bestimmten Stellen der Montage- bzw. Fertigungslinie zu schneiden, an denen die Wischleiste 20, 58 eine solche Führung erfährt, z.B. beim Aufziehen der Wischleiste 20, 58 auf einen Warenträger oder zum Zeitpunkt, wenn die Wischkante 26, 62 der Wischlippe 24, 60 geschnitten wird. Ferner kann es zweckmäßig sein, die Dämpfungsstege 38, 40, 70 erst dann zu schneiden, nachdem die Wischleiste 20, 58 vollständig in einem Wischblatt 12 montiert ist.

## Patentansprüche

1. Wischleiste (20, 58), deren Wischlippe (24, 60) im Bereich von Anlageschultern (28, 64) über einen Kippsteg (32, 74) an einer Kopfleiste (44, 66) angeformt ist, wobei in den durch den Kippsteg (32, 74), den Anlageschultern (28, 64) und den angrenzenden Teilen der Kopfleiste (44, 66) gebildeten Längsnuten (34, 36, 76, 78) quer zu diesen verlaufende Dämpfungsstege (38, 40, 70) vorgesehen sind, die an den angrenzenden Teilen der Längsnuten (34, 36, 76, 78) stoffschlüssig angeformt sind, **dadurch gekennzeichnet, dass** die Dämpfungsstege (38, 40, 70) in ihrer Längsrichtung trennbar sind und die Trennung der Dämpfungsstege (38, 40, 70) durch Reißen erzeugt wird, wobei die Lage der Trennstellen (42, 72) durch die Gestalt der freien Stirnseite (52, 54, 56) des jeweiligen Dämpfungsstegs (38, 40, 70) bestimmt ist.

2. Wischleiste (20, 58) nach Anspruch 1, **dadurch gekennzeichnet, dass** die Dämpfungsstege (38, 40, 70) aus einem anderen Werkstoff als die übrige Wischleiste (20, 58) besteht, der ein Weiterreißen eines Anrisses unterstützt.

3. Wischleiste (20, 58) nach Anspruch 2, **dadurch gekennzeichnet, dass** der Werkstoff der Dämpfungsstege (38, 40, 70) ein synthetischer Kautschuk oder ein Blend ist.

4. Wischleiste (20, 58) nach einem der vorhergehenden Ansprüche, **dadurch gekennzeichnet, dass** die Stirnseiten (52, 54, 56) der Dämpfungsstege (38, 40, 70) an den Trennstellen (42, 72) Kerben aufweisen.

5. Wischleiste (20, 58) nach Anspruch 4, **dadurch gekennzeichnet, dass** die Stirnseite (52) eine konkave Kontur aufweist.

6. Wischleiste (20, 58) nach Anspruch 4, **dadurch gekennzeichnet, dass** die Stirnseite (54) mit einer angrenzenden Wand der Längsnut (34, 36) eine scharfe Hohlkehle bildet.

7. Wischleiste (20, 58) nach Anspruch 4, **dadurch gekennzeichnet, dass** die Stirnseite (56) die Form einer geschweiften Klammer besitzt, deren Spitze zwischen der Anlageschulter (28) und der Kopfleiste (44) nach innen weist.

8. Verfahren zum Herstellen einer Wischleiste (20, 58), deren Wischlippe (24, 60) im Bereich von Anlageschultern (28, 64) über einen Kippsteg (32, 74) an einer Kopfleiste (44, 66) angeformt ist, wobei in den durch den Kippsteg (32, 74), den Anlageschultern (28, 64) und den angrenzenden Teilen der Kopfleiste (44, 66) gebildeten Längsnuten (34, 36, 76, 78) quer zu diesen verlaufende Dämpfungsstege (38, 40, 70) vorgesehen sind, die an den angrenzenden Teilen der Längsnuten (34, 36, 76, 78) stoffschlüssig angeformt und in ihrer Längsrichtung getrennt sind, **dadurch gekennzeichnet, dass** die Trennung durch einen Schneidvorgang erfolgt, indem die Dämpfungsstege (38, 40, 70) beim Aufziehen der Wischleiste (20, 58) auf einen Warenträger, auf der sie in der Montagelinie geführt ist, geschnitten werden.

9. Verfahren nach dem Oberbegriff von Anspruch 8, **dadurch gekennzeichnet, dass** die Dämpfungsstege (38, 40, 70) gleichzeitig eingeschnitten werden, wenn eine Wischkante (26, 62) der Wischlippe (24, 60) geschnitten wird.

10. Verfahren nach dem Oberbegriff von Anspruch 8, **dadurch gekennzeichnet, dass** die Dämpfungsstege (38, 40, 70) erst eingeschnitten werden, nachdem die Wischleiste (20, 58) vollständig in einem Wischblatt (12) montiert ist.

11. Verfahren nach einem der Ansprüche 8 bis 10, **dadurch gekennzeichnet, dass** zum Schneiden der Dämpfungsstege (38, 40, 70) ein Messer verwendet wird, dessen Dicke kleiner 0,5 mm ist und dessen freie Länge ungefähr 40 mm beträgt.

12. Verfahren nach einem der Ansprüche 8 bis 10, **dadurch gekennzeichnet, dass** zum Schneiden der Dämpfungsstege (38, 40, 70) ein Rollenmesser verwendet wird, das während des Schneidvorgangs am Drehen gehindert ist und zum Nachschärfen um einen gewissen Sektor weitergedreht wird.

13. Verfahren nach einem der Ansprüche 8 bis 12, **dadurch gekennzeichnet, dass** die Dämpfungsstege (38, 40, 70) zunächst etwas angeschnitten und dann weiter gerissen werden.

## Claims

1. Wiper strip (20, 58), the wiping lip (24, 60) of which is formed integrally on a top strip (44, 66) via a tilting web (32, 74) in the region of bearing shoulders (28, 64), damping webs (38, 40, 70) being provided in the longitudinal grooves (34, 36, 76, 78) which are formed by the tilting web (32, 74), the bearing shoulders (28, 64) and the adjacent parts of the top strip (44, 66), which damping webs (38, 40, 70) run transversely with respect to the said longitudinal grooves (34, 36, 76, 78) and are formed integrally in a material-to-material manner on the adjacent parts of the longitudinal grooves (34, 36, 76, 78), **characterized in that** the damping webs (38, 40, 70) can be divided in their longitudinal direction and the division of the damping webs (38, 40, 70) is produced by tearing, the position of the division points (42, 72) being determined by the design of the free end side (52, 54, 56) of the respective damping web (38, 40, 70).

2. Wiper strip (20, 58) according to Claim 1, **characterized in that** the damping webs (38, 40, 70) are composed of a different material from the remaining wiper strip (20, 58), which assists further tearing of an initial tear.

3. Wiper strip (20, 58) according to Claim 2, **characterized in that** the material of the damping webs (38, 40, 70) is a synthetic rubber or a blend.

4. Wiper strip (20, 58) according to one of the preceding claims, **characterized in that** the end sides (52, 54, 56) of the damping webs (38, 40, 70) have notches at the division points (42, 72).

5. Wiper strip (20, 58) according to Claim 4, **characterized in that** the end side (52) has a concave contour.

6. Wiper strip (20, 58) according to Claim 4, **characterized in that** the end side (54) forms an acute hollow channel with an adjacent wall of the longitudinal groove (34, 36).

7. Wiper strip (20, 58) according to Claim 4, **characterized in that** the end side (56) has the shape of a curly bracket, the tip of which points to the inside between the bearing shoulder (28) and the top strip (44).

8. Method for producing a wiper strip (20, 58), the wiping lip (24, 60) of which is formed integrally on a top strip (44, 66) via a tilting web (32, 74) in the region of bearing shoulders (28, 64), damping webs (38, 40, 70) being provided in the longitudinal grooves (34, 36, 76, 78) which are formed by the tilting web (32, 74), the bearing shoulders (28, 64) and the adjacent parts of the top strip (44, 66), which damping webs (38, 40, 70) run transversely with respect to the said longitudinal grooves (34, 36, 76, 78), are formed integrally in a material-to-material manner on the adjacent parts of the longitudinal grooves (34, 36, 76, 78) and are divided in their longitudinal direction, **characterized in that** the division is carried out by a cutting operation, by the damping webs (38, 40, 70) being cut during pulling of the wiper strip (20, 58) onto a product carrier, on which it is guided on the assembly line.

9. Method according to the precharacterizing clause of Claim 8, **characterized in that** the damping webs (38, 40, 70) are cut at the same time as a wiping edge (26, 62) of the wiping lip (24, 60) is cut.

10. Method according to the precharacterizing clause of Claim 8, **characterized in that** the damping webs (38, 40, 70) are cut only after the wiper strip (20, 58) is mounted completely in a wiper blade (12).

11. Method according to one of Claims 8 to 10, **characterized in that** a knife is used to cut the damping webs (38, 40, 70), the thickness of which knife is less than 0.5 mm and the free length of which knife is approximately 40 mm.

12. Method according to one of Claims 8 to 10, **characterized in that** a roller cutter is used to cut the damping webs (38, 40, 70), which roller cutter is prevented from rotating during the cutting operation and is rotated further by a certain sector for re-sharpening.

13. Method according to one of Claims 8 to 12, **characterized in that** the damping webs (38, 40, 70) are first of all cut into somewhat and are then torn further.

## Revendications

1. Raclette de balai d'essuie-glace (20, 58) dont la lèvre de balai d'essuie-glace (24, 60) est formée sur une raclette de tête (44, 66) par l'intermédiaire d'un élément jointif basculant (32, 74) dans la région d'épaulements d'appui (28, 64), des éléments jointifs d'amortissement (38, 40, 70) étant prévus dans les rainures longitudinales (34, 36, 76, 78) formées par l'élément jointif basculant (32, 74), les épaulements d'appui (28, 64) et les parties adjacentes de la raclette de tête (44, 66), lesquels éléments jointifs d'amortissement s'étendent transversalement par rapport à ces rainures longitudinales et sont formés par liaison de matière sur les parties adjacentes des rainures longitudinales (34, 36, 76, 78), **caractérisée en ce que** les éléments jointifs d'amortissement (38, 40, 70) peuvent être séparés dans leur direction longitudinale et la séparation des éléments jointifs d'amortissement (38, 40, 70) est produite par déchirement, la position des points de séparation (42, 72) étant déterminée par la forme des faces frontales libres (52, 54, 56) de l'élément jointif d'amortissement respectif (38, 40, 70).

2. Raclette de balai d'essuie-glace (20, 58) selon la revendication 1, **caractérisée en ce que** les éléments jointifs d'amortissement (38, 40, 70) sont constitués d'un matériau qui est différent de celui du reste de la raclette de balai d'essuie-glace (20, 58) et qui favorise une propagation d'une déchirure initiale.

3. Raclette de balai d'essuie-glace (20, 58) selon la revendication 2, **caractérisée en ce que** le matériau des éléments jointifs d'amortissement (38, 40, 70) est un caoutchouc synthétique ou un mélange.

4. Raclette de balai d'essuie-glace (20, 58) selon l'une quelconque des revendications précédentes, **caractérisée en ce que** les faces frontales (52, 54, 56) des éléments jointifs d'amortissement (38, 40, 70) comprennent des entailles aux points de séparation (42, 72).

5. Raclette de balai d'essuie-glace (20, 58) selon la revendication 4, **caractérisée en ce que** la face frontale (52) présente un contour concave.

6. Raclette de balai d'essuie-glace (20, 58) selon la revendication 4, **caractérisée en ce que** la face frontale (54) forme avec une paroi adjacente de la rainure longitudinale (34, 36) une cannelure pointue.

7. Raclette de balai d'essuie-glace (20, 58) selon la revendication 4, **caractérisée en ce que** la face frontale (56) présente la forme d'une accolade dont la pointe est tournée vers l'intérieur entre l'épaulement d'appui (28) et la raclette de tête (44).

8. Procédé de fabrication d'une raclette de balai d'essuie-glace (20, 58) dont la lèvre de balai d'essuie-glace (24, 60) est formée sur une raclette de tête (44, 66) par l'intermédiaire d'un élément jointif basculant (32, 74) dans la région d'épaulements d'appui (28, 64), des éléments jointifs d'amortissement (38, 40, 70) étant prévus dans les rainures longitudinales (34, 36, 76, 78) formées par l'élément jointif basculant (32, 74), les épaulements d'appui (28, 64) et les parties adjacentes de la raclette de tête (44, 66), lesquels éléments jointifs d'amortissement s'étendent transversalement par rapport à ces rainures longitudinales, sont formés par liaison de matière sur les parties adjacentes des rainures longitudinales (34, 36, 76, 78) et sont séparés dans leur direction longitudinale, **caractérisé en ce que** la séparation s'effectue par une opération de coupe, en coupant les éléments jointifs d'amortissement (38, 40, 70) lors du montage de la raclette de balai d'essuie-glace (20, 58) sur un support d'articles sur lequel elle est guidée dans la ligne de montage.

9. Procédé selon le préambule de la revendication 8, **caractérisé en ce que** les éléments jointifs d'amortissement (38, 40, 70) sont entaillés simultanément lorsqu'une arête d'essuyage (26, 62) de la lèvre de balai d'essuie-glace (24, 60) est coupée.

10. Procédé selon le préambule de la revendication 8, **caractérisé en ce que** les éléments jointifs d'amortissement (38, 40, 70) ne sont entaillés qu'après que la raclette de balai d'essuie-glace (20, 58) a été montée complètement dans un balai d'essuie-glace (12).

11. Procédé selon l'une quelconque des revendications 8 à 10, **caractérisé en ce qu'**un couteau est utilisé pour couper les éléments jointifs d'amortissement (38, 40, 70), l'épaisseur de ce couteau étant inférieure à 0,5 mm et sa longueur libre valant approximativement 40 mm.

12. Procédé selon l'une quelconque des revendications 8 à 10, **caractérisé en ce que** pour couper les éléments jointifs d'amortissement (38, 40, 70), on utilise un couteau circulaire que l'on empêche de tourner pendant l'opération de coupe et que l'on continue à faire tourner sur un certain secteur pour le réaffutage.

13. Procédé selon l'une quelconque des revendications 8 à 12, **caractérisé en ce que** les éléments jointifs d'amortissement (38, 40, 70) sont tout d'abord quelque peu entamés et ensuite déchirés davantage.
